# EUROPEAN PATENT SPECIFICATION

(11) **EP 4 209 013 B1**
(45) Date of publication and mention of the grant of the patent: **11.03.2026**
(21) Application number: 20768304.6
(22) Date of filing: 03.09.2020
(51) Int. Cl.: H04N 21/41, H04N 21/422

(54) **A COMPUTER SOFTWARE MODULE ARRANGEMENT, A CIRCUITRY ARRANGEMENT, A DEVICE, A SYSTEM AND A METHOD FOR IMPROVED CONTROL OF MEDIA CASTING**
COMPUTERSOFTWAREMODULANORDNUNG, SCHALTUNGSANORDNUNG, VORRICHTUNG, SYSTEM UND VERFAHREN ZUR VERBESSERTEN STEUERUNG VON MEDIENGUSS
AGENCEMENT DE MODULE LOGICIEL INFORMATIQUE, AGENCEMENT DE CIRCUITS, DISPOSITIF, SYSTÈME ET PROCÉDÉ DE COMMANDE AMÉLIORÉE DE DIFFUSION MULTIMÉDIA

(43) Date of publication of application: 12.07.2023
(73) Proprietor: Telefonaktiebolaget LM Ericsson (publ), 164 83 Stockholm (SE)
(72) Inventor: DAHLGREN, Fredrik, 224 65 Lund (SE); HUNT, Alexander, 218 72 TYGELSJÖ (SE)
(74) Representative: Ericsson
(86) International application number: PCT/EP2020/074674
(87) International publication number: WO 2022/048760

(56) References cited:
- EP-A1- 2 259 603
- EP-B1- 2 259 603
- US-A1- 2014 371 880

## Description

### TECHNICAL FIELD

The present invention relates to an arrangement, an arrangement comprising computer software modules, an arrangement comprising circuits, a device, a system and a method for providing improved control of media casting, and in particular to an arrangement, an arrangement comprising computer software modules, an arrangement comprising circuits, a device, a system and a method for providing improved control of media casting utilizing more than one cast control device.

### BACKGROUND

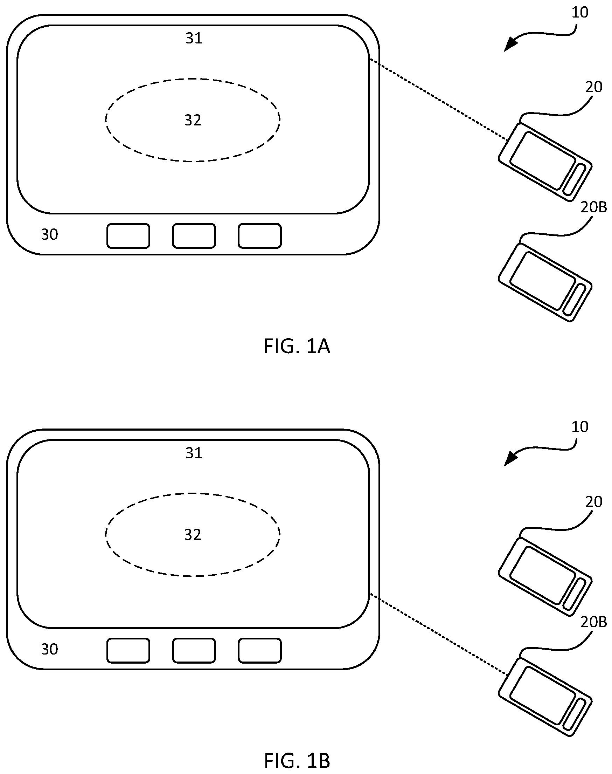

There exist technologies for using a device, such as a smartphone, to control the content to be presented on a media set, such as a television set (TV). Examples of such technologies are Chromecast^{™} or AppleTV^{™}. Both these technologies work according to the same principle, a smartphone is paired with the media set for casting media on the media set in a media casting system. **Figure 1A** shows an example of such a media casting system 10. The media casting system 10 comprises a media cast controller 20 (such as a smartphone or tablet computer implementing the needed functionality) and a media set 30, wherein the smartphone 20 is paired with the media set 30. The pairing of the smartphone 20 with the media set 300 may be directly, as indicated in **figure 1A** through the dotted line, or it may be indirectly through for example a WiFi^{™} router - as is the case in Chromecast^{™}. By using such a paired smartphone 20, the user is enabled select content 32 to present via the media set 30, for example to play it on a display 31 of the media set 30. The content 32 may be stored locally in the smartphone's memory or the content may be retrieved from a remote server for example through the internet. The user is also able to control the manner that the content 32 is presented in, for example by allowing the user to switch content, stop presenting, pause presenting, fast forwarding, rewinding or other commonly known manner of controlling media that is presented, by providing control commands through a user interface of the smartphone 20. The smartphone 20 being the media cast controller.

A normal situation for viewing content is that the user is not alone, and there may be a second media cast controller 20B present. However, the second media cast controller 20B is not paired with the media set and therefor unable to control any media being casted on this particular media set 30.

Should the user wish to allow the second user control of the media set 30, the second user is typically able to set up a guest pairing of the second media cast controller 20B with the media set 30. As seen in figure 1B the second media cast controller 20B is now paired with the media set 30 and thus able to control the content being casted to and presented by the media set 30.

The inventors have realized a problem that exists in contemporary cast systems, namely that even if a second media cast controller is allowed to pair, only one pairing is allowed control and the first media cast controller 20 will thus be deactivated when the second media cast controller 20B is paired - or at least as the second media cast controller 20B initiates casting. This is indicated in figure 1B, showing a schematic view of the media cast system 20 of figure 1A, by the first media cast controller 20 no longer being in control of the media set 30 as indicated by the dotted line being shifted to the second media cast controller.

As discussed above, when two smartphones 20, 20B (or other devices) connect to a media set 30 for casting media there will be some sort of arbitration between the different devices on which device will decide what to show and to control that playback, which arbitration is complex and typically implies that the secondary user must take over the complete control or to queue up for such a control take-over, or the first user must leave the casting entirely for the second user to be granted access. In some systems, the second device 20B is able to provide content to be casted, but this content is then selected and controlled by the first (or active) device 20.

The patent application published as EP2259603A1 discloses a remote operation apparatus includes: an operating-side first communication section that is capable of transmitting a signal to an operation target apparatus; an operating-side second communication section that is capable of transmitting/receiving the signal to/from the operation target apparatus; a connection start section which transmits a connection start signal, which notifies a start of the transmission/reception of the signal via the operating-side second communication section, to the operation target apparatus via the operating-side first communication section; and an operating-side communication control section which transmits/receives the signal to/from the operation target apparatus via the operating-side second communication section. With this arrangement, it is possible to easily specify a communication partner to/from which a signal is transmitted/received via the operating-side second communication section. Moreover, an amount of data transmitted by the operating-side first communication section can be suppressed to a bare minimum. That is, it is possible to easily specify a communication partner and to suppress an amount of data transmitted by communication means for specifying the communication partner to a bare minimum. US2014/371880A1 discloses a system where master and slave roles of controllers can be swapped.

As the inventors have realized, there is no real sharing of control of the media set 30 for all practical purposes, as only one device at a time is able to control the casting of the media.

As the inventors have realized, there is thus a need for an arrangement, a device and a method for providing improved control of media casting.

### SUMMARY

An object of the present teachings is to overcome or at least reduce or mitigate the problems discussed in the background section

According to one aspect a media cast controller is provided, the media cast controller comprising a communication interface arranged to establish a connection with a media set and a controller configured to: connect with the media set; determine a user status, and if the media cast controller is the first to connect, the media cast controller becomes a primary controller, wherein a primary controller is enabled to execute a primary command set being the command set of the media cast controller; and if the media cast controller is not the first to connect, the media cast controller becomes a secondary controller, wherein a secondary controller is enabled to execute a secondary command set being the command set of the media cast controller, wherein the primary command set comprises the secondary command set in addition to fundamental commands according to the appended claims.

The teachings herein may be implemented as software, hardware or a mix of software and hardware components. One benefit with the proposed teachings is that when several people are seeing a movie, YouTube clips, or a presentation together on a joint screen, there can be multiple active users that are allowed in an extremely simple and intuitive manner to point things out on the screen, mark important things, pause, or even select a bookmark for a replay of certain parts. The fast, intuitive, and non-intrusive manner taught herein of allowing such secondary controllers will greatly enhance the viewing experience for multiple viewers, and fully exploit the benefit of everyone having a personal device to be used instead of the explicit control arbitration of a single remote controller.

In one embodiment the controller is further configured, if the media cast controller is not the first to connect, to determine whether a priority of the user of the media cast controller is higher than a priority of a primary controller, and if so the media cast controller becomes the primary controller.

In one embodiment the controller is further configured to receive an acceptance from a user in association with the media cast controller becoming the primary controller.

In one embodiment the controller is further configured to generate a request to perform a higher-level command and transmit the request to a media cast controller operating as the primary controller; receive an acceptance from the media cast controller operating as a primary controller; and in response thereto execute the higher-level command.

In one embodiment the controller is further configured to receive a request to perform a higher-level command from a media cast controller operating as a secondary controller; receive user acceptance of the request; generate an acceptance of the request accordingly; and transmit the acceptance to the media cast controller operating as a secondary controller.

In one embodiment the controller is further configured to generate a message to change roles; transmit the message to change roles to the media cast controller operating as a secondary controller; whereby the media cast controller operating as a secondary controller becomes the primary controller.

In one embodiment the controller is further configured to generate a message to change roles; transmit the message to change roles to the media cast controller operating as the primary controller; whereby the media cast controller operating as the primary controller becomes a secondary controller.

In one embodiment the controller is further configured to receive a command from a user, determine if the command is within the command set of the media cast controller, and if so execute the command, wherein the command relates to casting media on the media set.

In one embodiment the media cast controller is a smartphone or a tablet computer.

According to another aspect there is provided a method for use in a media cast controller, wherein the method comprises: connecting with a media set; determining a user status, and if the media cast controller is the first to connect, the media cast controller becomes a primary controller, wherein a primary controller is enabled to execute a primary command set being the command set of the media cast controller; and if the media cast controller is not the first to connect, the media cast controller becomes a secondary controller, wherein a secondary controller is enabled to execute a secondary command set being the command set of the media cast controller, wherein the primary command set comprises the secondary command set in addition to fundamental commands according to the appended claims.

According to another aspect there is provided a computer-readable medium carrying computer instructions that when loaded into and executed by a controller of a media cast controller enables the media cast controller to implement the method according to herein.

According to another aspect there is provided a software component arrangement for controlling media casting in a media cast controller, wherein the software component arrangement comprises: a software component for connecting with a media set and a software component for determining a user status. The software component arrangement also comprises a software component for changing roles so that the media cast controller becomes a primary controller if the media cast controller is the first to connect, wherein a primary controller is enabled to execute a primary command set being the command set of the media cast controller. The software component arrangement also comprises a software component for changing roles so that the media cast controller becomes a secondary controller if the media cast controller is not the first to connect, wherein a secondary controller is enabled to execute a secondary command set being the command set of the media cast controller, wherein the primary command set comprises the secondary command set in addition to fundamental commands according to the appended claims.

According to another aspect there is provided an arrangement being a media cast controller comprising circuitry for media cast control according to an embodiment of the teachings herein. The arrangement comprising circuitry for media cast control is adapted to be used in a media cast controller as taught herein. The arrangement comprising circuitry for media cast control comprises circuitry for connecting with a media set and circuitry for determining a user status. The arrangement comprising circuitry for media cast control also comprises circuitry for changing roles so that the media cast controller becomes a primary controller if the media cast controller is the first to connect, wherein a primary controller is enabled to execute a primary command set being the command set of the media cast controller. The arrangement comprising circuitry for media cast control also comprises circuitry for changing roles so that the media cast controller becomes a secondary controller if the media cast controller is not the first to connect, wherein a secondary controller is enabled to execute a secondary command set being the command set of the media cast controller, wherein the primary command set comprises the secondary command set in addition to fundamental commands according to the appended claims.

Further embodiments and advantages of the present invention will be given in the detailed description. It should be noted that the teachings herein find use in digital imagery arrangements in digital photography as well as many areas of computer vision, including image retrieval, robotic vision, augmented reality and video surveillance.

### BRIEF DESCRIPTION OF THE DRAWINGS

Embodiments of the invention will be described in the following, reference being made to the appended drawings which illustrate non-limiting examples of how the inventive concept can be reduced into practice.
Figure 1A shows a schematic view of a contemporary media casting system comprising a first media cast controller and a media set;
Figure 1B shows a schematic view of the contemporary media casting system of figure 1A as a second media cast controller is activated;
Figure 2A shows a schematic view of a media cast controller according to an embodiment of the present invention;
Figure 2B shows a schematic view of a media cast controller according to an embodiment of the present invention;
Figure 3 shows a schematic view of a media set according to one embodiment of the teachings herein;
Figure 4A shows a schematic view of a media casting system according to one embodiment of the teachings herein;
Figure 5 shows a flowchart of a general method according to an embodiment of the present invention;
Figure 6 shows a component view for a software component arrangement according to an embodiment of the teachings herein;
Figure 7 shows a component view for an arrangement comprising circuits according to an embodiment of the teachings herein; and
Figure 8 shows a schematic view of a computer-readable medium carrying computer instructions that when loaded into and executed by a controller of an arrangement enables the arrangement to implement an embodiment of the present invention.

### DETAILED DESCRIPTION

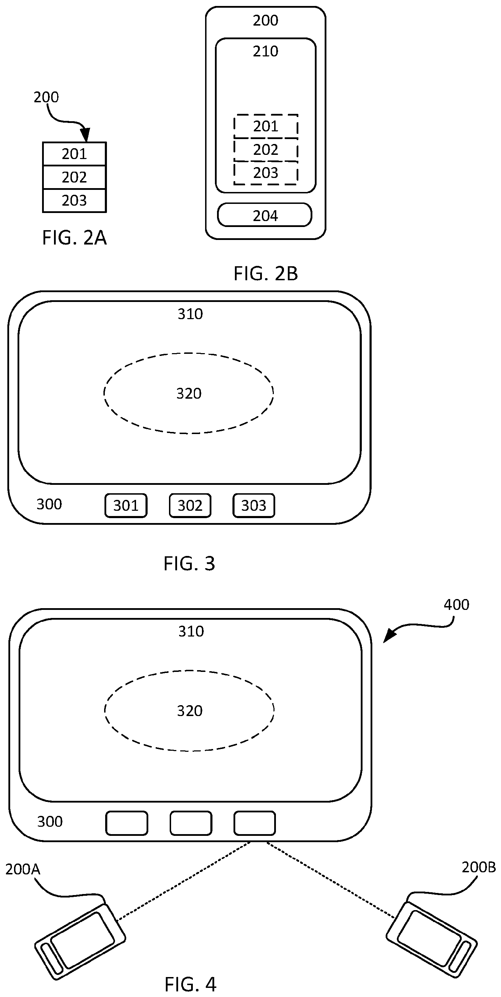

Figure 2A shows a schematic view of a media cast controller 200 according to an embodiment of the present invention. The media cast controller 200 comprises a controller 201 and a memory 202. The controller 201 is configured to control the overall operation of the media cast controller 200. In one embodiment, the controller 201 is a graphics controller. In one embodiment, the controller 201 is a general purpose controller. In one embodiment, the controller 201 is a combination of a graphics controller and a general purpose controller. As a skilled person would understand there are many alternatives for how to implement a controller, such as using Field - Programmable Gate Arrays circuits, ASIC, GPU, etc. in addition or as an alternative. For the purpose of this application, all such possibilities and alternatives will be referred to simply as the controller 201.

It should also be noted that in one embodiment, parts of or all of the processing is performed remotely, where a local controller 201 is configured to provide input data to a remote processing unit, such as in a cloud server, causing the remote processing unit to perform the processing and receiving the results of such processing as output from the remote processing unit. For the purpose of this application, such possibilities and alternatives will also be referred to simply as the controller 201, the controller thus representing both the local controller and the remote processing unit.

The memory 202 is configured to store media data, cast settings and computer-readable instructions that when loaded into the controller 201 indicates how the media cast controller 200 is to be controlled. The memory 202 may comprise several memory units or devices, but they will be perceived as being part of the same overall memory 202. There may be one memory unit for storing media data, one memory unit for media set settings, and one memory for the communications interface (see below) for storing settings, and so on. As a skilled person would understand there are many possibilities of how to select where data should be stored and a general memory 202 for the media cast controller 200 is therefore seen to comprise any and all such memory units for the purpose of this application. In particular, the media content may be stored locally in the memory 202 or it may be stored remotely in a server (possibly accessible via a cloud service), wherein an identifier for the media content is stored locally. As a skilled person would understand there are many alternatives of how to implement a memory, for example using non-volatile memory circuits, such as EEPROM memory circuits, or using volatile memory circuits, such as RAM memory circuits. For the purpose of this application all such alternatives will be referred to simply as the memory 202.

Figure 2B shows a schematic view of a media cast controller being a communications device 200 according to an embodiment of the present invention. In this embodiment, the communications device 200 is a smartphone or a tablet computer. In such an embodiment, the communications device 200 further comprises a display arrangement 210, which may be a touchscreen of the smartphone or tablet computer.

In the following, simultaneous reference will be made to the media cast controllers 200 of figures 2A and 2B.

In one embodiment the media cast controller 200 may further comprise a communication interface 203. The communication interface 203 may be wired and/or wireless. The communication interface 203 may comprise several interfaces.

In one embodiment the communication interface 203 comprises a USB (Universal Serial Bus) interface. In one embodiment the communication interface 203 comprises a HDMI (High Definition Multimedia Interface) interface. In one embodiment the communication interface 203 comprises a Display Port interface. In one embodiment the communication interface 203 comprises an Ethernet interface. In one embodiment the communication interface 203 comprises a MIPI (Mobile Industry Processor Interface) interface. In one embodiment the communication interface comprises an analog interface, a CAN (Controller Area Network) bus interface, an I2C (Inter-Integrated Circuit) interface, or other interface.

In one embodiment the communication interface 203 comprises a radio frequency (RF) communications interface. In one such embodiment the communication interface 203 comprises a Bluetooth^{™} interface, a WiFi^{™} interface, a ZigBee^{™} interface, a RFID^{™} (Radio Frequency IDentifier) interface, Wireless Display (WiDi) interface, Miracast interface, and/or other RF interface commonly used for short range RF communication. In an alternative or supplemental such embodiment the communication interface 203 comprises a cellular communications interface such as a fifth generation (5G) cellular communication interface, an LTE (Long Term Evolution) interface, a GSM (Global Systéme Mobilé) interface and/or other interface commonly used for cellular communication. In one embodiment the communication interface 203 is configured to communicate using the UPnP (Universal Plug n Play) protocol. In one embodiment the communication interface 203 is configured to communicate using the DLNA (Digital Living Network Appliance) protocol.

In one embodiment, the communication interface 203 is configured to enable communication through more than one of the example technologies given above. As an example, a wired interface, such as MIPI could be used for establishing an interface between the display arrangement, the controller and the user interface, and a wireless interface, for example WiFi^{™} could be used to enable communication between the media cast controller 200 and an external host device (not shown).

The communications interface 203 is configured to enable the media cast controller 200 to communicate with media sets, such as television sets, gaming consoles, video viewers or projectors (not shown).

A user interface 204 may be comprised in the media cast controller 200 (only shown in figure 2B). Additionally or alternatively, (at least a part of) the user interface 204 may be comprised remotely in the media cast controller 200 through the communication interface 203, the user interface 204 then (at least a part of it) not being a physical means in the media cast controller 200, but implemented by receiving user input through a remote device (not shown) through the communication interface 203.

The user interface 204 enables the user to input control commands for the media to be cast, which commands may be forwarded through the communication interface to the media set.

Figure 3 shows a schematic view of a media set 300 according to herein. The media set 300 comprises a media output device 310 for presenting media content 320. In one embodiment the media output device 310 is a display for presenting visual content 320 (such as one or more images and/or video). In one embodiment the media output device 310 is a speaker device for presenting audio content 320 (such as music and/or video sound track). In one embodiment the media output device 310 is a combined display for presenting visual content (such as one or more images and/or video)and a speaker device for presenting audio content (such as music and/or video sound track). In one embodiment the media set 300 is a television set. In one embodiment the media set 300 is a projector device. It should be noted that in some embodiments the media set may be any device capable of presenting media content.

The media set 300 further comprises a controller 301, a memory 302 and a communication interface 303.

The controller 301 is configured to control the overall operation of the media set 300. In one embodiment, the controller 301 is a graphics controller. In one embodiment, the controller 301 is a general purpose controller. In one embodiment, the controller 301 is a combination of a graphics controller and a general purpose controller. As a skilled person would understand there are many alternatives for how to implement a controller, such as using Field -Programmable Gate Arrays circuits, ASIC, GPU, etc. in addition or as an alternative. For the purpose of this application, all such possibilities and alternatives will be referred to simply as the controller 301. It should also be noted that in one embodiment, parts of or all of the processing is performed remotely, where a local controller 301 is configured to provide input data to a remote processing unit, such as in a cloud server, causing the remote processing unit to perform the processing and receiving the results of such processing as output from the remote processing unit. For the purpose of this application, such possibilities and alternatives will also be referred to simply as the controller 301, the controller thus representing both the local controller and the remote processing unit.

The memory 302 is configured to store media data, cast settings and computer-readable instructions that when loaded into the controller 301 indicates how the media set 300 is to be controlled. The memory 302 may comprise several memory units or devices, but they will be perceived as being part of the same overall memory 302. There may be one memory unit for storing media data, one memory unit for media cast controller settings, and one memory for the communications interface (see below) for storing settings, and so on. As a skilled person would understand there are many possibilities of how to select where data should be stored and a general memory 302 for the media set 300 is therefore seen to comprise any and all such memory units for the purpose of this application. In particular, the media content may be stored locally in the memory 302 or it may be stored remotely in a server (possibly accessible via a cloud service), wherein an identifier for the media content is stored locally. As a skilled person would understand there are many alternatives of how to implement a memory, for example using non-volatile memory circuits, such as EEPROM memory circuits, or using volatile memory circuits, such as RAM memory circuits. For the purpose of this application all such alternatives will be referred to simply as the memory 302.

In one embodiment the communication interface 303 is wired, such as through a Local Area Network (LAN) connection or antenna connection for receiving media content to be viewed.

In one embodiment the communication interface 303 is wireless, and in one embodiment the communication interface 303 is both wireless and wired.

In an embodiment where the communication interface 303 is wireless, the communication interface 303 comprises a radio frequency (RF) communications interface. In one such embodiment the communication interface 203 comprises a Bluetooth^{™} interface, a WiFi^{™} interface, a ZigBee^{™} interface, a RFID^{™} (Radio Frequency IDentifier) interface, Wireless Display (WiDi) interface, Miracast interface, and/or other RF interface commonly used for short range RF communication. In an alternative or supplemental such embodiment the communication interface 303 comprises a cellular communications interface such as a fifth generation (5G) cellular communication interface, an LTE (Long Term Evolution) interface, a GSM (Global Systéme Mobilé) interface and/or other interface commonly used for cellular communication.

The communications interface 303 is configured to enable the media set 300 to communicate with one or more media cast controllers 200 as well as receiving media content to be presented. The communication between the media set 300 and the one or more media cast controllers 200 may be direct or via a router device, such as a WiFi^{™} router. Such communication links are commonly known and need no further details to be understood by a skilled person.

The media set 300 is thus enabled to receive media content 320 to be presented as well as cast control commands from the one or more media cast controllers 200. As would be understood, the media set 30 may be comprised of a single device or several devices cooperating, some possibly even being remote. The media content 320 may be received directly from the one or more media cast controllers 200 or indirectly via a remote server, also accessible via the communication interface 303, wherein the one or more media cast controllers 200 provides an identifier for the media content 320. Some example of the control commands that the media set 300 can receive include but are not limited to a stop command, a pause command, a play command , a skip command, a fast forward (or scroll forwards) command, a rewind (or scroll backwards) command, a zoom command, a partial zoom command, a command to set up a partial view independently controlled, a command to adapt the presentation speed (slow-motion/fast-motion) of the media content, change volume, change display properties (such as brightness or contrast), select which media to be viewed, split the screen, select a channel, zoom a view, pan a view, enable figures or shapes to be drawn (using a pointer), typing text or generating other types of overlays to name a few examples.

Figure 4 shows a schematic view of a media cast system 400 according to herein. The media cast system 400 comprises a media set 300, such as the one discussed in relation to figure 3, and one or more media cast controllers 200 such as the ones discussed in relation to figures 2A and 2B. In the example illustrated in figure 4, the media cast system 400 comprises two media cast controllers, a first media cast controller 200A and a second media cast controller 200B. Even though the first media cast controller 200A and the second media cast controller 200B of figure 2 are shown as being similar devices, they may be different devices. For example the first media cast controller 200A may be a smartphone and the second media cast controller 200B may be a smartwatch.

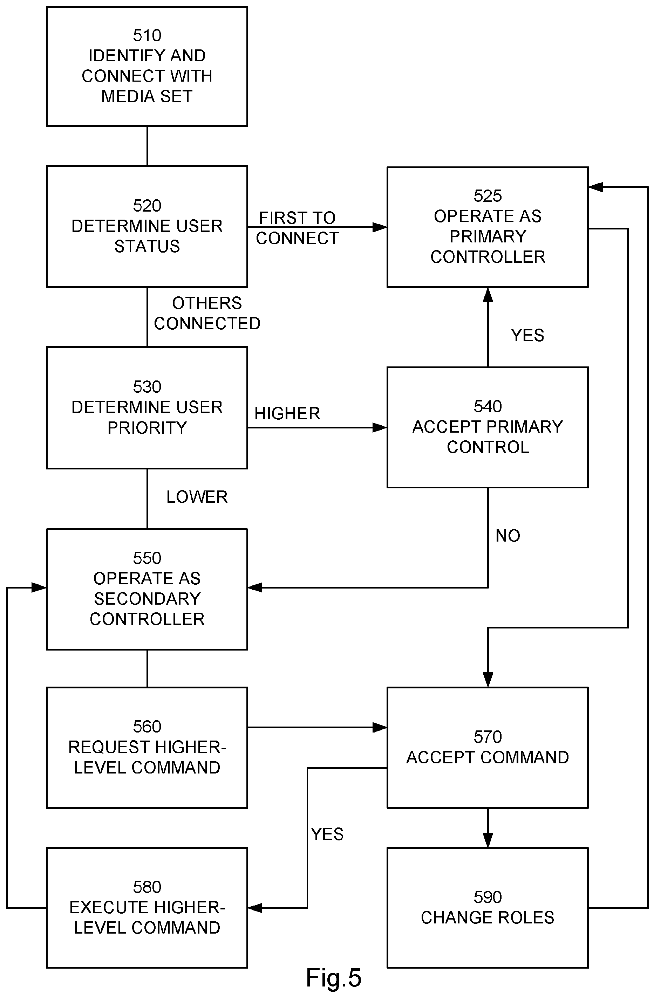

Figure 5 shows a general flowchart for a method according to the teachings herein, the method being for controlling media cast to a media set through more than one media cast controllers 200. The manners in which a casting of media may be controlled by more than one media cast controllers 200 according to the teachings herein, will now be discussed with simultaneous reference to figure 4 and figure 5. Reference will also be given simultaneously to two user-scenarios; A) a use in a public area, such as in a sports bar, a store or a museum, and B) use in a private area, such as in a user's home where friends are visiting or a conference room.

Starting with the public area user scenario, a public area such as a store, a museum, a gallery or a sports bars to mention a few examples may have one or more media sets for providing content, entertainment or educational, to a plurality of visitors. In a store, there may be different media sets for presenting information on different articles or products for sale. In a museum or gallery there may be different media sets for providing information on different exhibition items. And in a sports bar, there may be different media sets to show different games or matches. In common to all these scenarios is that there are more than one user. For example, in a museum/gallery there will be a curator, a guide and a visitor (the number of users may of course vary), in a store there may be a shop manager, a sales person and a customer, and in a sports bar there may be a bar manager, a server and a guest. There are also three (or more) levels of users, with assumingly greater rights to influence what is to be casted, the manager and curator having the highest level, the guide, sales person, and server having a middle level and the visitor, customer or guest having the lowest level.

In the private area user scenario, there are also different levels of users. In the home scenario, there are adults, children and visitors, and in the conference scenario there are staff, presenters and attendants.

As a first user engages in casting media to a media set 300 from a first media cast controller 200A, the first media cast controller 200A identifies the media set 300 and connects 510 with it.

In one embodiment the media set 300 is identified through its presence in a local area network, such as in a WiFi^{™} or in a Bluetooth^{™} network.

In one embodiment the media set 300 is identified through an image being captured of the media set 300 by the media cast controller 200, or by pointing the media cast controller 200 at the media set 300, whereby the media cast controller 200 is configured to identify the media set through a discover process. The various manners of actually identifying the media set are known and require no further details to be understood by a skilled person.

If first media cast controller 200A is not already paired with the media set 300, a pairing is performed as part of the connection. As first media cast controller 200A connects a status of first media cast controller 200A is determined 520 to ascertain whether there are other media cast controllers 200 already connected - or if the first media cast controller 200A is the first to connect. If the first media cast controller 200A is the first to connect, the first media cast controller 200A becomes 525 a primary controller and is given a high level of control and subsequently operates accordingly as a secondary controller. If there are other media cast controllers 200 already connected, the first media cast controller 200A becomes 550 a secondary controller and is given a low level of control and subsequently operates accordingly as a secondary controller.

The level of control indicates which control command the user is allowed to perform on the media set and the casted media.

In one embodiment the actual control level given to a user upon connection is based on an identity of the user. In such an embodiment, a user can be identified to have a priority which may be higher than a second user's priority. Returning to how the connection is established, if it is determined that there are other media cast controllers 200 already connected, it is on such an embodiment, determined 530 if a priority of the first user is higher or lower than (or same as) a priority of an already connected (second) user. If the priority of the first user is higher than the priority of the already connected (second) user, the first user becomes 525 the primary controller and the second user becomes a secondary controller 550.

In one such embodiment, the first user is enabled to select 540 whether to accept being a primary controller or not. The acceptance may be through a prompting upon connecting or through a command given by the first user after connecting.

Returning to the public area user scenario, as a server enters a sports bar and connects to one of the TV sets it is determined that the server is the first to connect and the server becomes the primary controller. As a guest enters, the guest also connects with the TV and as the server is already connected, and as the guest has a lower priority, the guest becomes the secondary controller. Later, as the manager enters, the manager also connects with the TV. The manager having the higher priority becomes the primary controller, however, as the manager will be doing office work, the manager declines to be primary controller and becomes a secondary controller, and the server remains the primary controller.

Similarly in the private area user scenario, as an occupant comes home, the occupant connects with the TV set and becomes the primary controller. As a visitor arrives the visitor also connects, but becomes a secondary controller. Later, as another occupant comes home, the second occupant also connects, but as the second occupant is not interested in the media viewing session, the second occupant declines, and the first occupant remains the primary controller. Optionally, the second occupant would be required to request to become primary controller, but refrains from doing so.

A primary controller is enabled to perform one primary command set of commands, and a secondary controller is enabled to perform one secondary command set of commands. The primary command set comprises more commands than the secondary command set. In general terms, the secondary command set comprises non-intrusive commands, and the primary command set comprises fundamental commands in addition to the non-intrusive commands. Examples of non-intrusive commands are changing the volume, pausing, pointing at a point on the display 310, initiating a partial view (possibly independently controlled by the secondary controller) to mention some examples. Examples of fundamental commands are changing content to be viewed, stopping the cast, rewinding, skipping, zooming or other commands fundamentally altering the presentation of the media.

In one example a user may have a priority that does not allow the user to be a primary controller. In one such embodiment, a user may have a priority that only allows the user to be a primary controller if accepted by a higher priority user.

For the public area user scenario, this may prevent a visitor to a museum to totally change an exhibition by preventing the user from becoming a primary controller, even if the user is the first to connect.

A user may further be associated with clearance rights, which determine what commands may be taken by the user. It should be noted that the clearance rights of a user are not the same as the control allowed according to a status as controller (primary/secondary). The clearance rights are separate, but the rights awarded through the status may never exceed the clearance rights of a user. In other words, simply because a user is primary controller and allowed to select which media to present, such as by choosing a channel to view, that user is only allowed to select media according to the user's clearance rights, possibly barring some channels, such as pay-per-view channels.

The first user, having had connected then proceeds with taking part of the media being casted given commands according to the first users command level (secondary/primary).

However, should a secondary controller wish to perform a higher-level command, the secondary controller may request 560 this by issuing a command on the second media cast controller 200B. As such a request is received, the primary controller is prompted whether to accept 570 this request or not, by the second media cast controller 200B transmitting the request to the first media cast controller 200A, which the first media cast controller 200A receives and possibly accepts after user input from the first user. The request may even comprise a request to exceed the clearance rights (temporarily) for the second user. If the request is accepted, the secondary controller is allowed to execute the higher request 580. The request may be for a single command or for a group of commands. In case the request is for a group of commands, the group of commands may be associated with a time bound, so that the second user is allowed to execute higher level commands during a bounded time period. As the higher-level command has been executed, the secondary controller continues 550 as a secondary controller. As an alternative to simply awarding the secondary controller the rights to (temporarily) perform the higher-level command, the primary controller may change 590 the roles, possibly temporarily, so that the requesting secondary controller becomes 525 the primary controller or vice-versa.

As part of becoming and then operating as a primary controller 530 or a secondary controller 550, the media cast controller receives one or more commands from a user, via the user interface 204 and determines if the command is within the command set of the media cast controller 200, and if so executes the command, wherein the command relates to casting media on the media set 300.

In one embodiment the media cast controller is configured to present a control panel on the user interface corresponding to the command set of the media cast controller. In such an embodiment the media cast controller is configured to present a primary control panel on the user interface when operating as a primary controller and the media cast controller is configured to present a secondary control panel on the user interface when operating as a secondary controller.

For example, when a first user intends to show content (from internet or from user device), the user connects to the TV, possibly by pointing the media cast control device's camera at the TV, the TV is recognized, identified and confirmed, paired, and the first user can start showing and controlling the content 320 to be cast. A secondary user can then, by a similar process connect to the same TV 300 (points the devices camera at the TV, which is recognized, identified and confirmed, paired) but then - since the TV is already in active use by a first user - automatically gets up a secondary control panel.

In some embodiments, there are different levels of control for secondary controllers: non-intrusive, low-impact, and request for main control. The non-intrusive control needs no arbitration, and allows the user to point at certain parts of the touchscreen of the device by which a pointer is shown on the TV screen - this allows that secondary user to point out events on the screen for the others without actually taking full control of the playback. Such pointing can be just momentarily or allowing the user to draw structures so that what is drawn remains on the screen for a certain duration or until that user or the main controller stops it. Another non-intrusive function might be to paus the playback (but not end it), since that person might want to talk, take a break, etc.

There might thus be different levels of control or access rights awarded to different controllers, where a higher access right gives access to more commands, and commands of a more intrusive nature. The control levels may rank from no control at all up to the same control as the primary controller.

In some embodiments, the default level of secondary control rights, e.g. Level 1, is the same for all new secondary control connections regardless of who it is or prior access rights. In some embodiments, the user gets the same control rights as last time being a secondary controller (if the user has used the device before). In some embodiments, differentiation between groups of users are made, so a guest might have one default level whereas employees or family members have a higher control class by default if entered as secondary. In some situation, a new secondary gets the same control rights as the other existing secondary of the same category (e.g. the primary increase the level for exSiting guests from 0 to 1, then all new guests would get 1 by default instead of 0).

When a first user shall show content (from internet or from user device), the user points the devices camera at the TV, the TV is recognized, identified and confirmed, paired, and the first user can start showing and controlling the content. A secondary user can then, by a similar process (points the devices camera at the TV, which is recognized, identified and confirmed, paired) but then - since the TV is already in active use by a first user - automatically gets up a secondary control panel. There are different levels of control for secondary controllers: non-intrusive, low-impact, and request for main control. The non-intrusive control needs no arbitration, and allows the user to point at certain parts of the touchscreen of the device by which a pointer is shown on the TV screen - this allows that secondary user to point out events on the screen for the others without actually taking full control of the playback. Such pointing can be just momentarily or allowing the user to draw structures so that what is drawn remains on the screen for a certain duration or until that user or the main controller stops it. Another non-intrusive function might be to pause the playback (but not end it), since that person might want to talk, take a break, etc.

The secondary control might also allow the user to get a screen sharing of the content on that user's personal device (e.g. smartphone), allowing that user to pause the playback for a careful look, or even go back to previous scenes if that user missed something. Such a secondary local playback on that user's device might be at a lower bit-rate.

In the low-impact secondary-control mode, the first user is still in control of what is being shown, but the secondary controller is given certain ability to impact. It can be to move the playback to an earlier scene or to replay a slide presentation from an earlier slide - from a bookmark the secondary user is providing - either because that user missed out on certain content or wants to discuss something from an earlier phase of the playback or presentation. It might also be that the secondary user wants to overlay some information related to the current content, or change subtitles, etc.

In request-for-main-control, the secondary user asks for, and is granted, the main control with the rights to change content entirely, etc. This is similar to the typical change of controller in today's system as discussed in relation to figures 1A and 1B. It is thus clear that the media cast system of figure 4 and as discussed herein is clearly an expansion of the system as discussed in relation to figures 1A and 1B.

The main controller can set the default allowance to a certain level: with non-intrusive mode as default, all other users might initiate secondary control and be allowed to perform actions related to that without explicit acceptance by the main controller. If the default mode is set to no access, also the non-intrusive actions require acceptance. During a playback session, the main controller can change the default mode for all users, individual users, and give access on request for individual users on demand.

In some embodiments, and depending on the secondary control mode, a secondary controller is able to get a secondary view of the current playback, such as the partial display. For example, if the media set plays a movie, the secondary controller gets the same movie, potentially at a lower resolution, on the display 210 of the second media cast controller 200B, at the same time (same place in the movie). The secondary controller may then zoom in, pause, go back to a previous point in the movie, etc., on the personal devices screen. Then, if permitted by the secondary control mode or by the primary controller, that user can request the playback of the TV to that bookmark - potentially with some drawing on that scene. In some embodiments, this is possible also for a slideshow from a main controller's presentation.

For example: The primary controller starts the playback of a movie. One second user misses some details in one scene, so the second user connects, possibly by pointing the smartphone (being the second media cast controller 200B) to the TV, gets secondary control, selects duplication of playback from some point in movie, rewinds into that scene on the smartphone, looks carefully, makes a circle around a specifically interesting detail. Then the second user tells the others that there is a specifically interesting detail in a previous scene, and requests to be allowed the command of changing the playback on the TV to that specific scene the second user has bookmarked on the smartphone, with the drawing to point out the detail - now all can see this. After that, they either proceed from that previous bookmark or from the place they were before jumping to this previous position.

Another use case: The main or primary controller is showing a slide presentation from his smartphone or personal device (e.g. laptop). One user wants to compare one slide to one of the previous slides, so he picks up his smartphone, point at the TV, becomes a secondary user, selects duplication of content, flips though previous slides on his smartphone until he finds the relevant previous slide. Now he perhaps wants to show the others that previous slide, or ask a question on that previous slide - and he can request to rights to change which slide is shown to the bookmark he now has on his smartphone, and that is then shown on the TV. This is more efficient that if the main controller should flip though the previous slides just for that single user to find the slide he might, or might not, have a question to.

In some embodiment, certain content is denoted private, or confidential, so it cannot be duplicated on the screen of a secondary controller, whereas others are denoted public and can be duplicated.

The duplication and control of the playback of the duplication can be implemented in different ways. For content that is requested by the main controller to be playbacked on the TV directly from internet, similar to a Chromecast session, the secondary controller is requested and given the identity of the content as well as current bookmark from the TV or the main controller device. Then, the secondary control device sets up its own streaming over internet, but the place in the playback is kept synchronized with the TV or main controller up to the point when the secondary controller pauses or change place in his playback. For content that is sent from the main controller's device, e.g. at slide presentation, the content is provided from the main control device - either directly or via the TV.

In some embodiments, the bookmark and screen drawing of a secondary controller might be shared with other users provide devices rather than the main TV. In such embodiments, secondary controllers are not only paired with the TV but also with the other devices that are currently paired with the same TV.

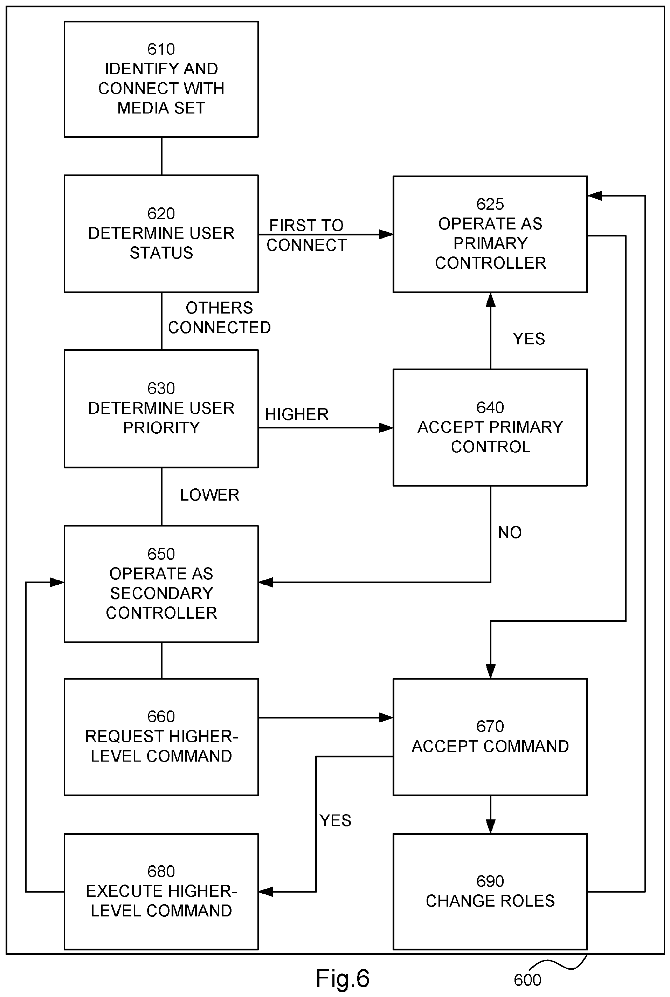

Figure 6 shows a component view for a software component (or module) arrangement 600 according to an embodiment of the teachings herein. The software component arrangement 600 is adapted to be used in a media cast controller 200 as taught herein for providing image processing as taught herein.

The software component arrangement 600 comprises a software component for connecting 610 with a media set 300 and a software component for determining 620 a user status. The software component arrangement 600 also comprises a software component for changing roles 625 so that the media cast controller 200 becomes a primary controller if the media cast controller 200 is the first to connect, wherein a primary controller is enabled to execute a primary command set being the command set of the media cast controller 200. The software component arrangement 600 also comprises a software component for changing roles 650 so that the media cast controller 200 becomes a secondary controller if the media cast controller 200 is not the first to connect, wherein a secondary controller is enabled to execute a secondary command set being the command set of the media cast controller 200, wherein the primary command set comprises the secondary command set in addition to fundamental commands.

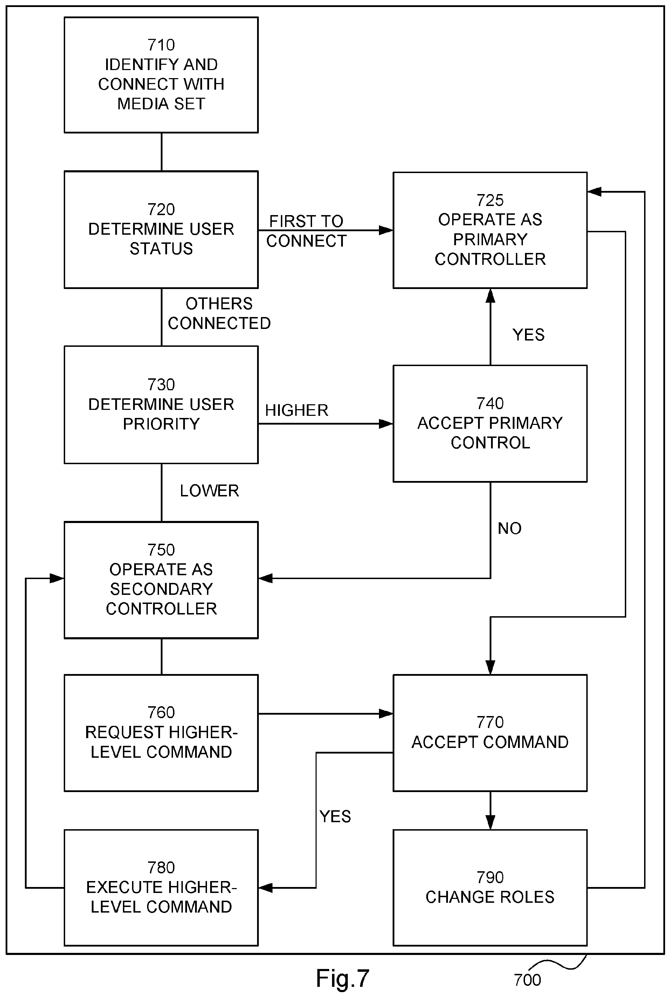

Figure 7 shows a component view for an arrangement comprising circuitry for media cast control 700 according to an embodiment of the teachings herein. The arrangement comprising circuitry for media cast control 700 is adapted to be used in a media cast controller 200 as taught herein. The arrangement comprising circuitry for media cast control 700 of figure 7 comprises circuitry for connecting 710 with a media set 300 and circuitry for determining 720 a user status. The arrangement comprising circuitry for media cast control 700 also comprises circuitry for changing roles 725 so that the media cast controller 200 becomes a primary controller if the media cast controller 200 is the first to connect, wherein a primary controller is enabled to execute a primary command set being the command set of the media cast controller 200. The arrangement comprising circuitry for media cast control 700 also comprises circuitry for changing roles 750 so that the media cast controller 200 becomes a secondary controller if the media cast controller 200 is not the first to connect, wherein a secondary controller is enabled to execute a secondary command set being the command set of the media cast controller 200, wherein the primary command set comprises the secondary command set in addition to fundamental commands.

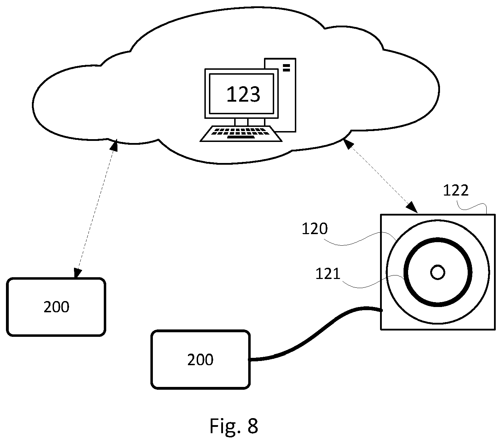

Figure 8 shows a schematic view of a computer-readable medium 120 carrying computer instructions 121 that when loaded into and executed by a controller of a media cast controller 200 enables the media cast controller 200 to implement the present invention.

The computer-readable medium 120 may be tangible such as a hard drive or a flash memory, for example a USB memory stick or a cloud server. Alternatively, the computer-readable medium 120 may be intangible such as a signal carrying the computer instructions enabling the computer instructions to be downloaded through a network connection, such as an internet connection.

In the example of figure 8, a computer-readable medium 120 is shown as being a computer disc 120 carrying computer-readable computer instructions 121, being inserted in a computer disc reader 122. The computer disc reader 122 may be part of a cloud server 123 - or other server - or the computer disc reader may be connected to a cloud server 123 - or other server. The cloud server 123 may be part of the internet or at least connected to the internet. The cloud server 123 may alternatively be connected through a proprietary or dedicated connection. In one example embodiment, the computer instructions are stored at a remote server 123 and be downloaded to the memory 202 of the media cast controller 200 for being executed by the controller 201.

The computer disc reader 122 may also or alternatively be connected to (or possibly inserted into) a media cast controller 200 for transferring the computer-readable computer instructions 121 to a controller of the media cast controller 200 (presumably via a memory of the media cast controller 200).

Figure 8 shows both the situation when a media cast controller 200 receives the computer-readable computer instructions 121 via a server connection and the situation when another media cast controller 200 receives the computer-readable computer instructions 121 through a wired interface. This enables for computer-readable computer instructions 121 being downloaded into a media cast controller 200 thereby enabling the media cast controller 200 to operate according to and implement the invention as disclosed herein.

In above examples, the media cast controllers are smartphones. However, other devices that might be used as main or secondary controllers might be laptops, tablets, smartwatches, or other devices with a touchpad or touchscreen and/or a display.

## Claims

1. A media cast controller (200) comprising a communication interface (203) arranged to establish a connection with a media set (300) and a controller (201) configured to:
connect (510) with the media set (300);
determine (520) a status of the media cast controller (200) indicating if the first media cast controller (200A) is a primary or secondary controller, and
if the media cast controller (200) is the first to connect, the media cast controller (200) becomes a primary controller (525), wherein a primary controller is enabled to execute a primary command set being the command set of the media cast controller (200); and
if the media cast controller (200) is not the first to connect, the media cast controller (200) becomes a secondary controller (550), wherein a secondary controller is enabled to execute a secondary command set being the command set of the media cast controller (200), wherein the primary command set comprises the secondary command set in addition
to fundamental commands, wherein
the controller (201) is further configured, if the media cast controller (200) is not the first to connect, to
determine (530), whether a priority of the user of the media cast controller (200) is higher than a priority of a primary controller, and if so the media cast controller (200) becomes the primary controller (525), and wherein the user is associated with clearance rights, which determines what commands may be taken by the user, wherein the control allowed according to the status of the media cast controller (200) - primary/secondary controller- may never exceed the clearance rights of the user.

2. The media cast controller (200) according to claim 1, wherein the controller (201) is further configured to receive an acceptance from a user in association with the media cast controller (200) becoming the primary controller (525).

3. The media cast controller (200) according to any previous claim, wherein the controller (201) is further configured to generate (560) a request to perform a higher-level command and transmit the request to a media cast controller (200) operating as the primary controller; receive an acceptance from the media cast controller (200) operating as a primary controller; and in response thereto execute (580) the higher-level command.

4. The media cast controller (200) according to claim 3, wherein the controller (201) is further configured to receive a request to perform a higher-level command from a media cast controller (200) operating as a secondary controller; receive (570) user acceptance of the request; generate an acceptance of the request accordingly; and transmit the acceptance to the media cast controller (200) operating as a secondary controller.

5. The media cast controller (200) according to claim 4, wherein the controller (201) is further configured to generate a message to change roles (590); transmit the message to change roles to the media cast controller (200) operating as a secondary controller; whereby the media cast controller (200) operating as a secondary controller becomes the primary controller.

6. The media cast controller (200) according to claim 4, wherein the controller (201) is further configured to generate a message to change roles (590); transmit the message to change roles to the media cast controller (200) operating as the primary controller; whereby the media cast controller (200) operating as the primary controller becomes a secondary controller.

7. The media cast controller (200) according to any preceding claim, wherein the controller (201) is further configured to receive a command from a user, determine if the command is within the command set of the media cast controller (200), and if so execute the command, wherein the command relates to casting media on the media set.

8. The media cast controller (200) according to any preceding claim, wherein the media cast controller (200) is a smartphone or a tablet computer.

9. A method for use in a media cast controller (200), wherein the method comprises: connecting (510) with a media set (300); determining (520) a status of the media cast controller (200) indicating if the first media cast controller (200A) is a primary or secondary controller, and if the media cast controller (200) is the first to connect, the media cast controller (200) becomes a primary controller (525), wherein a primary controller is enabled to execute a primary command set being the command set of the media cast controller (200); and if the media cast controller (200) is not the first to connect, the media cast controller (200) becomes a secondary controller (550), wherein a secondary controller is enabled to execute a secondary command set being the command set of the media cast controller (200), wherein the primary command set comprises the secondary command set in addition to fundamental commands, wherein the method further comprises, if the media cast controller (200) is not the first to connect, determining (530), whether a priority of the user of the media cast controller (200) is higher than a priority of a primary controller, and if so the media cast controller (200) becomes the primary controller (525) , and wherein the user is associated with clearance rights, which determines what commands may be taken by the user, wherein the control allowed according to the status of the media cast controller (200) - primary/secondary controller-may never exceed the clearance rights of the user.

10. A computer-readable medium (120) carrying computer instructions (121) that when loaded into and executed by a controller (201) of a media cast controller (200) enables the media cast controller (200) to implement the method according to claim 9.

11. A software component arrangement (600) for controlling media casting in a media cast controller (200), wherein the software component arrangement (600) comprises: a software component for connecting (610) with a media set (300); a software component for determining (620) a status of the media cast controller (200) indicating if the first media cast controller (200A) is a primary or secondary controller, and a software component for changing roles (625) so that the media cast controller (200) becomes a primary controller if the media cast controller (200) is the first to connect, wherein a primary controller is enabled to execute a primary command set being the command set of the media cast controller (200) and a software component for changing roles (650) so that the media cast controller (200) becomes a secondary controller if the media cast controller (200) is not the first to connect, wherein a secondary controller is enabled to execute a secondary command set being the command set of the media cast controller (200), wherein the primary command set comprises the secondary command set in addition to fundamental commands, wherein the software component arrangement (600) further comprises a software component for, if the media cast controller (200) is not the first to connect, determining (530), whether a priority of the user of the media cast controller (200) is higher than a priority of a primary controller, and if so the media cast controller (200) becomes the primary controller (525) , and wherein the user is associated with clearance rights, which determines what commands may be taken by the user, wherein the control allowed according to the status of the media cast controller (200) - primary/secondary controller-may never exceed the clearance rights of the user.

12. A media cast controller (700) comprising circuitry for controlling media casting comprising: circuitry for connecting (710) with a media set (300); circuitry for determining (720) a status of the media cast controller (200) indicating if the first media cast controller (200A) is a primary or secondary controller, and circuitry for changing roles (725) so that the media cast controller (200) becomes a primary controller if the media cast controller (200) is the first to connect, wherein a primary controller is enabled to execute a primary command set being the command set of the media cast controller (200) and circuitry for changing roles (750) so that the media cast controller (200) becomes a secondary controller if the media cast controller (200) is not the first to connect, wherein a secondary controller is enabled to execute a secondary command set being the command set of the media cast controller (200), wherein the primary command set comprises the secondary command set in addition to fundamental commands, wherein the media cast controller (700) further comprises circuitry for, if the media cast controller (200) is not the first to connect, determining (530), whether a priority of the user of the media cast controller (200) is higher than a priority of a primary controller, and if so the media cast controller (200) becomes the primary controller (525) , and wherein the user is associated with clearance rights, which determines what commands may be taken by the user, wherein the control allowed according to the status of the media cast controller (200) - primary/secondary controller- may never exceed the clearance rights of the user.

## Patentansprüche

1. Media-Cast-Steuereinheit (200), die eine Kommunikationsschnittstelle (203) umfasst, die zur Herstellung einer Verbindung mit einem Mediengerät (300) und einer Steuereinheit (201) angeordnet ist, die konfiguriert ist zum:
Herstellen einer Verbindung (510) mit dem Mediengerät (300);
Bestimmen (520) eines Status der Media-Cast-Steuereinheit (200), die angibt, ob die erste Media-Cast-Steuereinheit (200A) eine primäre oder sekundäre Steuereinheit ist, und
wenn die Media-Cast-Steuereinheit (200) als erste eine Verbindung herstellt, wird die Media-Cast-Steuereinheit (200) zu einer primären Steuereinheit (525), wobei eine primäre Steuereinheit befähigt ist, einen primären Befehlssatz auszuführen, der der Befehlssatz der Media-Cast-Steuereinheit (200) ist; und
wenn die Media-Cast-Steuereinheit (200) nicht als erste eine Verbindung herstellt, wird die Media-Cast-Steuereinheit (200) zu einer sekundären Steuereinheit (550), wobei eine sekundäre Steuereinheit befähigt ist, einen sekundären Befehlssatz auszuführen, der dem Befehlssatz der Media-Cast-Steuereinheit (200) entspricht, wobei der primäre Befehlssatz zusätzlich zu den grundlegenden Befehlen auch den sekundären Befehlssatz umfasst, wobei
die Steuereinheit (201) weiter konfiguriert ist, wenn die Media-Cast-Steuereinheit (200) als erste eine Verbindung herstellt, zum
Bestimmen (530), ob die Priorität des Benutzers der Media-Cast-Steuereinheit (200) höher ist als die Priorität einer primären Steuereinheit, und wenn ja, wird die Media-Cast-Steuereinheit (200) zur primären Steuereinheit (525), wobei dem Benutzer Freigaberechte zugeordnet sind, die bestimmen, welche Befehle vom Benutzer angenommen werden dürfen, wobei die gemäß dem Status der Medien-Cast-Steuereinheit (200) - primäre/sekundäre Steuereinheit - zulässige Steuerung niemals die Freigaberechte des Benutzers überschreiten darf.

2. Media-Cast-Steuereinheit (200) nach Anspruch 1, wobei die Steuereinheit (201) weiter so konfiguriert ist, dass sie eine Annahme von einem Benutzer im Zusammenhang mit der Media-Cast-Steuereinheit (200) empfängt, die zur primären Steuereinheit (525) wird.

3. Media-Cast-Steuereinheit (200) nach einem vorstehenden Anspruch, wobei die Steuereinheit (201) weiter so konfiguriert ist, dass sie eine Anforderung zur Durchführung eines übergeordneten Befehls generiert (560) und die Anforderung an eine als primäre Steuereinheit fungierende Media-Cast-Steuereinheit (200) übermittelt; eine Bestätigung von der als primäre Steuereinheit fungierenden Media-Cast-Steuereinheit (200) empfängt; und als Reaktion darauf den übergeordneten Befehl (580) ausführt.

4. Media-Cast-Steuereinheit (200) nach Anspruch 3, wobei die Steuereinheit (201) weiter so konfiguriert ist, dass sie eine Anforderung zur Durchführung eines übergeordneten Befehls von einer als sekundäre Steuereinheit fungierende Media-Cast-Steuereinheit (200) empfängt; die Benutzerannahme der Anforderung empfängt (570); entsprechend eine Annahme der Anforderung generiert; und die Annahme an die als sekundäre Steuereinheit fungierende Media-Cast-Steuereinheit (200) übermittelt.

5. Media-Cast-Steuereinheit (200) nach Anspruch 4, wobei die Steuereinheit (201) weiter so konfiguriert ist, dass sie eine Nachricht zum Rollenwechsel generiert (590); die Nachricht zum Rollenwechsel an die als sekundäre Steuereinheit fungierende Media-Cast-Steuereinheit (200) übermittelt, wodurch die als sekundäre Steuereinheit fungierende Media-Cast-Steuereinheit (200) zur primären Steuereinheit wird.

6. Media-Cast-Steuereinheit (200) nach Anspruch 4, wobei die Steuereinheit (201) weiter so konfiguriert ist, dass sie eine Nachricht zum Rollenwechsel (590) generiert; die Nachricht zum Rollenwechsel an die als primäre Steuereinheit fungierende Media-Cast-Steuereinheit (200) übermittelt; wodurch die als primäre Steuereinheit fungierende Media-Cast-Steuereinheit (200) zu einer sekundären Steuereinheit wird.

7. Media-Cast-Steuereinheit (200) nach einem vorstehenden Anspruch, wobei die Steuereinheit (201) weiter so konfiguriert ist, dass sie einen Befehl von einem Benutzer empfängt, bestimmt, ob sich der Befehl innerhalb des Befehlssatzes der Media-Cast-Steuereinheit (200) befindet, und wenn ja, den Befehl ausführt, wobei sich der Befehl auf das Übertragen von Medien auf das Mediengerät bezieht.

8. Media-Cast-Steuereinheit (200) nach einem vorstehenden Anspruch, wobei Media-Cast-Steuereinheit (200) ein Smartphone oder ein Tablet-Computer ist.

9. Verfahren zur Verwendung in einer Media-Cast-Steuereinheit (200), wobei das Verfahren Folgendes umfasst: Verbinden (510) mit einem Mediengerät (300); Bestimmen (520) eines Status der Media-Cast-Steuereinheit (200), die angibt, ob die erste Media-Cast-Steuereinheit (200A) eine primäre oder sekundäre Steuereinheit ist, und wenn Media-Cast-Steuereinheit (200) als erster eine Verbindung herstellt, wird die Media-Cast-Steuereinheit (200) zu einer primären Steuereinheit (525), wobei eine primäre Steuereinheit befähigt wird, einen primären Befehlssatz auszuführen, der der Befehlssatz der Media-Cast-Steuereinheit (200) ist; und wenn die Media-Cast-Steuereinheit (200) nicht als erste eine Verbindung herstellt, wird sie zu einer sekundären Steuereinheit (550), wobei eine sekundäre Steuereinheit befähigt ist, einen sekundären Befehlssatz auszuführen, der dem Befehlssatz der Media-Cast-Steuereinheit (200) entspricht, wobei der primäre Befehlssatz zusätzlich zu den grundlegenden Befehlen auch den sekundären Befehlssatz umfasst, wobei das Verfahren weiter, wenn die Media-Cast-Steuereinheit (200) nicht als erste eine Verbindung herstellt, die Bestimmung (530) umfasst, ob eine Priorität des Benutzers der Media-Cast-Steuereinheit (200) höher ist als eine Priorität einer primären Steuereinheit, und wenn ja, die Media-Cast-Steuereinheit (200) zur primären Steuereinheit (525) wird, und wobei dem Benutzer Freigaberechte zugeordnet werden, die bestimmen, welche Befehle vom Benutzer angenommen werden dürfen, wobei die gemäß dem Status der Medien-Cast-Steuereinheit (200) - primäre/sekundäre Steuereinheit - zulässige Steuerung niemals die Freigaberechte des Benutzers überschreiten darf.

10. Computerlesbares Medium (120), das Computeranweisungen (121) enthält, die, wenn sie in eine Steuereinheit (201) einer Media-Cast-Steuereinheit (200) geladen und von dieser ausgeführt werden, die Media-Cast-Steuereinheit (200) befähigen, das Verfahren nach Anspruch 9 zu implementieren.

11. Softwarekomponentenanordnung (600) zur Steuerung von des Media-Übertragens, in einer Media-Cast-Steuereinheit (200), wobei die Softwarekomponentenanordnung (600) Folgendes umfasst: eine Softwarekomponente zum Verbinden (610) mit einem Mediengerät (300); eine Softwarekomponente zum Bestimmen (620) eines Status der Media-Cast-Steuereinheit (200), die angibt, ob der erste Media-Cast-Steuereinheit (200A) eine primäre oder sekundäre Steuereinheit ist, und eine Softwarekomponente zum Rollenwechsel (625), sodass die Media-Cast-Steuereinheit (200) zur primären Steuereinheit wird, wenn die Media-Cast-Steuereinheit (200) als erste eine Verbindung herstellt, wobei eine primäre Steuereinheit befähigt ist, einen primären Befehlssatz auszuführen, der dem Befehlssatz der Media-Cast-Steuereinheit (200) entspricht, und eine Softwarekomponente zum Rollenwechsel (650), sodass die Media-Cast-Steuereinheit (200) zur sekundären Steuereinheit wird, wenn die Media-Cast-Steuereinheit (200) nicht als erste eine Verbindung herstellt, wobei eine sekundäre Steuereinheit befähigt ist, einen sekundären Befehlssatz auszuführen, der dem Befehlssatz der Media-Cast-Steuereinheit (200) entspricht, wobei der primäre Befehlssatz zusätzlich zu den grundlegenden Befehlen auch den sekundären Befehlssatz umfasst, wobei die Softwarekomponentenanordnung (600) weiter eine Softwarekomponente zum Bestimmen (530) umfasst, wenn die Media-Cast-Steuereinheit (200) nicht als erste eine Verbindung herstellt, ob eine Priorität des Benutzers der Medien-Cast-Steuereinheit (200) höher ist als eine Priorität einer primären Steuereinheit, und wenn ja, die Media-Cast-Steuereinheit (200) zur primären Steuereinheit (525) wird, wobei dem Benutzer Freigaberechte zugeordnet sind, die bestimmen, welche Befehle vom Benutzer angenommen werden dürfen, wobei die gemäß dem Status der Medien-Cast-Steuereinheit (200) - primäre/sekundäre Steuereinheit - zulässige Steuerung niemals die Freigaberechte des Benutzers überschreiten darf.

12. Media-Cast-Steuereinheit (700), umfassend eine Schaltung zur Steuerung des Media-Übertragens, umfassend: eine Schaltung zum Verbinden (710) mit einem Mediengerät (300); eine Schaltung (720) zum Bestimmen eines Status der Media-Cast-Steuereinheit (200), die angibt, ob die erste Media-Cast-Steuereinheit (200A) eine primäre oder sekundäre Steuereinheit ist, und eine Schaltung zum Rollenwechsel (725), sodass die Media-Cast-Steuereinheit (200) zu einer primären Steuereinheit wird, wenn die Media-Cast-Steuereinheit (200) als erste eine Verbindung herstellt, wobei eine primäre Steuereinheit befähigt ist, einen primären Befehlssatz ausführen, der der Befehlssatz der Media-Cast-Steuereinheit (200) ist, und eine Schaltung zum Rollenwechsel (750), sodass die Media-Cast-Steuereinheit (200) zu einer sekundären Steuereinheit wird, wenn die Media-Cast-Steuereinheit (200) nicht als erste eine Verbindung herstellt, wobei eine sekundäre Steuereinheit befähigt ist, einen sekundären Befehlssatz ausführen, der der Befehlssatz der Media-Cast-Steuereinheit (200) ist, wobei der primäre Befehlssatz zusätzlich zu den grundlegenden Befehlen den sekundären Befehlssatz umfasst, wobei die Media-Cast-Steuereinheit (700) weiter eine Schaltung umfasst, um, wenn die Media-Cast-Steuereinheit (200) nicht als erste eine Verbindung herstellt, zu Bestimmen (530), ob eine Priorität des Benutzers der Media-Cast-Steuereinheit (200) höher ist als eine Priorität einer primären Steuereinheit, und wenn ja, wird die Media-Cast-Steuereinheit (200) zur primären Steuereinheit (525), wobei dem Benutzer Freigaberechte zugeordnet sind, die bestimmen, welche Befehle vom Benutzer angenommen werden dürfen, wobei die gemäß dem Status der Medien-Cast-Steuereinheit (200) - primäre/sekundäre Steuereinheit - zulässige Steuerung niemals die Freigaberechte des Benutzers überschreiten darf.

## Revendications

1. Dispositif de commande de diffusion multimédia (200) comprenant une interface de communication (203) conçue pour établir une connexion avec un ensemble multimédia (300) et un dispositif de commande (201) configuré pour :
se connecter (510) avec l'ensemble multimédia (300) ;
déterminer (520) un statut du dispositif de commande de diffusion multimédia (200) indiquant si le premier dispositif de commande de diffusion multimédia (200A) est un dispositif de commande primaire ou secondaire, et
si le dispositif de commande de diffusion multimédia (200) est le premier à se connecter, le dispositif de commande de diffusion multimédia (200) devient un dispositif de commande primaire (525), dans lequel un dispositif de commande primaire est autorisé à exécuter un ensemble de commandes primaires qui est l'ensemble de commandes du dispositif de commande de diffusion multimédia (200) ; et
si le dispositif de commande de diffusion multimédia (200) n'est pas le premier à se connecter, le dispositif de commande de diffusion multimédia (200) devient un dispositif de commande secondaire (550), dans lequel un dispositif de commande secondaire est autorisé à exécuter un ensemble de commandes secondaires qui est l'ensemble de commande du dispositif de commande de diffusion multimédia (200), dans lequel l'ensemble de commandes primaires comprend l'ensemble de commandes secondaires outre les commandes fondamentales, dans lequel
le dispositif de commande (201) est en outre configuré, si le dispositif de commande de diffusion multimédia (200) n'est pas le premier à se connecter, pour
déterminer (530) si une priorité de l'utilisateur du dispositif de commande de diffusion multimédia (200) est supérieure à celle d'un dispositif de commande primaire, et si tel est le cas, le dispositif de commande de diffusion multimédia (200) devient le dispositif de commande primaire (525), et dans lequel l'utilisateur est associé à des droits d'autorisation qui déterminent les commandes qu'il peut exécuter, dans lequel la commande autorisée selon le statut du dispositif de commande de diffusion multimédia (200) - dispositif de commande primaire/secondaire - ne peut jamais dépasser les droits d'autorisation de l'utilisateur.

2. Dispositif de commande de diffusion multimédia (200) selon la revendication 1, dans lequel le dispositif de commande (201) est en outre configuré pour recevoir une acceptation d'un utilisateur en association avec le dispositif de commande de diffusion multimédia (200) devenant le dispositif de commande primaire (525).

3. Dispositif de commande de diffusion multimédia (200) selon une quelconque revendication précédente, dans lequel le dispositif de commande (201) est en outre configuré pour générer (560) une demande d'exécution d'une commande de niveau supérieur et transmettre la demande à un dispositif de commande de diffusion multimédia (200) fonctionnant comme dispositif de commande primaire ; recevoir une acceptation du dispositif de commande de diffusion multimédia (200) fonctionnant comme dispositif de commande primaire ; et en réponse à celle-ci exécuter (580) la commande de niveau supérieur.

4. Dispositif de commande de diffusion multimédia (200) selon la revendication 3, dans lequel le dispositif de commande (201) est en outre configuré pour recevoir une demande d'exécution d'une commande de niveau supérieur d'un dispositif de commande de diffusion multimédia (200) fonctionnant comme dispositif de commande secondaire ; recevoir (570) l'acceptation de la demande par l'utilisateur ; générer une acceptation de la demande en conséquence ; et transmettre l'acceptation au dispositif de commande de diffusion multimédia (200) fonctionnant comme dispositif de commande secondaire.

5. Dispositif de commande de diffusion multimédia (200) selon la revendication 4, dans lequel le dispositif de commande (201) est en outre configuré pour générer un message de changement de rôles (590) ; transmettre le message de changement de rôles au dispositif de commande de diffusion multimédia (200) fonctionnant comme dispositif de commande secondaire ; selon lequel le dispositif de commande de diffusion multimédia (200) fonctionnant comme dispositif de commande secondaire devient le dispositif de commande primaire.

6. Dispositif de commande de diffusion multimédia (200) selon la revendication 4, dans lequel le dispositif de commande (201) est en outre configuré pour générer un message de changement de rôles (590) ; transmettre le message de changement de rôles au dispositif de commande de diffusion multimédia (200) fonctionnant comme dispositif de commande primaire ; selon lequel le dispositif de commande de diffusion multimédia (200) fonctionnant comme dispositif de commande primaire devient un dispositif de commande secondaire.

7. Dispositif de commande de diffusion multimédia (200) selon une quelconque revendication précédente, dans lequel le dispositif de commande (201) est en outre configuré pour recevoir une commande d'un utilisateur, déterminer si la commande fait partie de l'ensemble de commandes du dispositif de commande de diffusion multimédia (200), et si tel est le cas, exécuter la commande, dans lequel la commande concerne la diffusion multimédia sur l'ensemble multimédia.

8. Dispositif de commande de diffusion multimédia (200) selon une quelconque revendication précédente, dans lequel le dispositif de commande de diffusion multimédia (200) est un smartphone ou une tablette.

9. Procédé destiné à être utilisé dans un dispositif de commande de diffusion multimédia (200), dans lequel le procédé comprend : la connexion (510) à un ensemble multimédia (300) ; la détermination (520) d'un statut du dispositif de commande de diffusion multimédia (200) indiquant si le premier dispositif de commande de diffusion multimédia (200A) est un dispositif de commande primaire ou secondaire ; si le dispositif de commande de diffusion multimédia (200) est le premier à se connecter, il devient un dispositif de commande primaire (525), dans lequel un dispositif de commande primaire est autorisé à exécuter un ensemble de commandes primaires étant l'ensemble de commandes du dispositif de commande de diffusion multimédia (200) ; et si le dispositif de commande de diffusion multimédia (200) n'est pas le premier à se connecter, le dispositif de commande de diffusion multimédia (200) devient un dispositif de commande secondaire (550), dans lequel un dispositif de commande secondaire est autorisé à exécuter un ensemble de commandes secondaire étant l'ensemble de commandes du dispositif de commande de diffusion multimédia (200), dans lequel l'ensemble de commandes primaires comprend l'ensemble de commandes secondaires outre les commandes fondamentales, dans lequel le procédé comprend en outre, si le dispositif de commande de diffusion multimédia (200) n'est pas le premier à se connecter, la détermination (530) si une priorité de l'utilisateur du dispositif de commande de diffusion multimédia (200) est supérieure à celle du dispositif de commande primaire et si tel est le cas, le dispositif de commande de diffusion multimédia (200) devient le dispositif de commande primaire (525), et dans lequel l'utilisateur est associé à des droits d'accès qui déterminent les commandes qu'il peut exécuter, dans lequel la commande autorisée selon le statut du dispositif de commande de diffusion multimédia (200) - dispositif de commande primaire/secondaire - ne peut en aucun cas dépasser les droits d'accès de l'utilisateur.

10. Support lisible par ordinateur (120) transportant des instructions informatiques (121) qui, lorsqu'elles sont chargées et exécutées par un dispositif de commande (201) d'un dispositif de commande de diffusion multimédia (200), permettent au dispositif de commande de diffusion multimédia (200) de mettre en œuvre le procédé selon la revendication 9.

11. Ensemble de composants logiciels (600) pour commander la diffusion multimédia dans un dispositif de commande de diffusion multimédia (200), dans lequel l'agencement de composants logiciels (600) comprend : un composant logiciel pour se connecter (610) à un ensemble multimédia (300) ; un composant logiciel pour déterminer (620) un statut du dispositif de commande de diffusion multimédia (200), indiquant si le premier dispositif de commande de diffusion multimédia (200A) est un dispositif de commande primaire ou secondaire et un composant logiciel pour changer les rôles (625) afin que le dispositif de commande de diffusion multimédia (200) devienne un dispositif de commande primaire s'il est le premier à se connecter, dans lequel un dispositif de commande primaire est autorisé à exécuter un ensemble de commandes primaires étant l'ensemble de commande du dispositif de commande de diffusion multimédia (200) et un composant logiciel pour changer les rôles (650) afin que le dispositif de commande de diffusion multimédia (200) devienne un dispositif de commande secondaire si le dispositif de commande de diffusion multimédia (200) n'est pas le premier à se connecter, dans lequel un dispositif de commande secondaire est autorisé à exécuter un ensemble de commandes secondaires étant l'ensemble de commandes du dispositif de commande de diffusion multimédia (200), dans lequel l'ensemble de commandes primaires comprend l'ensemble de commandes secondaires outre les commandes fondamentales, dans lequel l'ensemble de composants logiciels (600) comprend en outre un composant logiciel pour déterminer (530), si le dispositif de commande de diffusion multimédia (200) n'est pas le premier à se connecter, si une priorité de l'utilisateur du dispositif de commande de diffusion multimédia (200) est supérieure à celle d'un dispositif de commande primaire, et si tel est le cas le dispositif de commande de diffusion multimédia (200) devient le dispositif de commande primaire (525), et dans lequel l'utilisateur est associé à des droits d'accès qui déterminent les commandes qu'il peut exécuter, dans lequel la commande autorisée selon le statut du dispositif de commande de diffusion multimédia (200) - dispositif de commande primaire/secondaire - ne peut en aucun cas dépasser les droits d'accès de l'utilisateur.

12. Dispositif de commande de diffusion multimédia (700) comprenant un circuit de commande de diffusion multimédia comprenant : un circuit de connexion (710) avec un ensemble multimédia (300) ; un circuit de détermination (720) d'un statut du dispositif de commande de diffusion multimédia (200), indiquant si le premier dispositif de commande de diffusion multimédia (200A) est un dispositif de commande primaire ou secondaire ; un circuit de changement de rôle (725) de sorte que le dispositif de commande de diffusion multimédia (200) devienne un dispositif de commande primaire si le dispositif de commande de diffusion multimédia (200) est le premier à se connecter, dans lequel un dispositif de commande primaire est autorisé à exécuter un ensemble de commandes primaires étant l'ensemble de commande du dispositif de commande de diffusion multimédia (200) et un circuit de changement de rôle (750) de sorte que le dispositif de commande de diffusion multimédia (200) devienne un dispositif de commande secondaire s'il n'est pas le premier à se connecter, dans lequel un dispositif de commande secondaire est autorisé à exécuter un ensemble de commandes secondaires étant l'ensemble de commande du dispositif de commande de diffusion multimédia (200), dans lequel l'ensemble de commandes primaires comprend l'ensemble de commandes secondaire, outre les commandes fondamentales, dans lequel le dispositif de commande de diffusion multimédia (700) comprend également un circuit permettant, si le dispositif de commande de diffusion multimédia (200) n'est pas le premier à se connecter, de déterminer (530) si une priorité de l'utilisateur du dispositif de commande de diffusion multimédia (200) est supérieure à celle d'un dispositif de commandes primaires, et si tel est le cas, le dispositif de commande de diffusion multimédia (200) devient le dispositif de commande primaire (525), et dans lequel l'utilisateur est associé à des droits d'accès, qui déterminent les commandes qu'il peut exécuter, dans lequel la commande autorisée selon le statut du dispositif de commande de diffusion multimédia (200) - dispositif de commande primaire/secondaire - ne peut en aucun cas dépasser les droits d'accès de l'utilisateur.
